# EUROPEAN PATENT APPLICATION

(11) **EP 4 015 958 A1**
(43) Date of publication of application: **22.06.2022**
(21) Application number: 20214830.0
(22) Date of filing: 17.12.2020
(51) Int. Cl.: F28D 7/16, F28F 1/06, F28F 1/42

(54) **CORRUGATED HEAT TRANSFER PIPE**

(71) Applicant: Tetra Laval Holdings & Finance S.A., 1009 Pully (CH)
(72) Inventor: GULLBERG, Magnus, 212 42 Malmo (SE); STRÖM, Pär, SE-237 33 Bjärred (SE)
(74) Representative: Tetra Pak - Patent Attorneys SE

(57) **Abstract**

A heat transfer pipe (200, 300) for a heat exchanger (100) for heat treating a food product (FP) is provided. The heat transfer pipe (200) comprises a cylindrical-shaped body (202) for holding the food product (FP), said cylindrical-shaped body (202) comprising an inlet (204) and an outlet (206), a corrugation pattern (208), provided on the cylindrical-shaped body (202), for affecting a flow of a heat transfer fluid (HTF) provided outside the cylindrical-shaped body (202) and a flow of the food product (FP) inside the cylindrical-shaped body (202), wherein the corrugation pattern (208) comprises a plurality of helical-shaped grooves (210a-c, 310a-d), wherein the helical-shaped grooves (210a-c, 310a-d) are parallel.

## Description

### Technical Field

The invention relates to heat treatment of food products in general. More particularly it relates to a heat transfer pipe, a method for producing a heat transfer pipe, a tubular heat exchanger and a method for heat treating a food product.

### Background Art

Today it is well known to use tubular heat exchangers for heat treating food products, such as milk and juice. The tubular heat exchangers come with a number of advantages, such as being energy efficient. This particularly holds true if they are run regeneratively, i.e. outgoing product is provided in outer shells such that incoming product held in tube bundles is heated by the outgoing product. In addition to being energy efficient, the tubular heat exchangers can be built in modules such that they can be adapted to different types of product. In other words, the tubular heat exchangers are versatile.

Even though the tubular heat exchanger is a well-known piece of equipment within e.g. the dairy industry, the basic concept is continuously improved such that, for instance, heat exchange efficiency and operational time are improved. One such improvement is that a variety of different types of the tube bundles are offered. For instance, dimensions of inner pipes forming the tube bundles have been addressed to meet specific needs of certain food products, and also how the inner pipes are arranged with respect to one another has been adapted to different types of food products. Further, corrugation patterns provided on the inner pipes, also referred to as heat transfer pipes, have been improved such that flow of the food product passing the inside the heat exchange pipes and flow of heat transfer fluid passing the outside are affected in a way such that the heat exchange is made more efficient.

However, even if the tubular heat exchangers of today are efficient and reliable, there is a need to further improve these in terms of energy efficiency and versatility.

### Summary

It is an object of the invention to at least partly overcome one or more of the above-identified limitations of the prior art. In particular, it is an object to provide a heat transfer pipe provided with a corrugation pattern that can provide for that the energy efficiency is improved. Generally, by having a plurality of helical-shaped and parallel grooves forming the corrugation pattern, the corrugation pattern can be adapted to a higher degree compared to many present corrugation patterns in which only one helical-shaped groove is used.

According to a first aspect it is provided a heat transfer pipe for a heat exchanger for heat treating a food product, said heat transfer pipe comprising a cylindrical-shaped body for holding the food product, said cylindrical-shaped body comprising an inlet and an outlet, and a corrugation pattern, provided on the cylindrical-shaped body, for affecting a flow of a heat transfer fluid provided outside the cylindrical-shaped body and a flow of the food product inside the cylindrical-shaped body. The corrugation pattern comprises a plurality of helical-shaped grooves, wherein the helical-shaped grooves are parallel.

An advantage with the plurality of helical-shaped grooves is that these can be placed close to one another, which provides for that a longitudinal distance between consecutive grooves can be reduced. This in turn provides for that depths of the grooves can be reduced without compromising on heat exchange efficiency. As an effect of more shallow grooves, a surface finish is improved, i.e. fewer irregularities are then present. An improved surface finish in turn provides for that less energy is needed for transferring the food product past the grooves, while also reducing fouling.

Another advantage of having the plurality of helical-shaped grooves is that these grooves can be set individually. For instance, grooves of different widths and/or depths may be provided on the heat transfer pipe. With this possibility the heat transfer pipe can be more precisely fine-tuned to meet specific needs of different food products.

The plurality of helical-shaped grooves may have identical pitches. An advantage with this is that the grooves may be formed at the same time by using one roller for each groove.

Longitudinal distances between consecutive grooves may be less than half the length of the pitches. An advantage with having short longitudinal distances is that the surface finish can be improved, which in turn provides for improved energy efficiency. Having the possibility to have short longitudinal distances without compromising on the pitches provides for that improved surface finish can be achieved without negatively affecting the heat exchange efficiency which can depend on the pitches.

The plurality of helical-shaped grooves may have different depths, and the different depths may differ from each other by 10% or more. An advantage with having different depths are that the corrugation pattern can be adjusted to a higher degree compared to single helical-shaped groove corrugation pattern.

The plurality of helical-shaped grooves may have depths that are less than 1% to 4% of an outer diameter of the cylindrical-shaped body. Having shallow grooves provides for improved surface finish, which in turn provides for improved energy efficiency.

The plurality of helical-shaped grooves may have different widths. An advantage with different widths is that the corrugation pattern can be tuned to meet the specific needs of a particular food product.

The plurality of helical-shaped grooves may be made by rollers with radii between 1.5 to 3.3 mm.

The plurality of helical-shaped grooves may comprise four helical-shaped grooves.

Properties of the plurality of helical-shaped grooves may be selected based on features (properties) of the food product. An advantage with this is that the corrugation pattern is adapted to a particular food product, which can provide for the heat treatment can be made more efficient in terms of time needed as well as in terms of energy needed. The properties of the grooves may be at least two of the number of grooves, the different widths of the grooves, the different depths of the grooves, the pitch of the grooves, and the longitudinal distances between consecutive grooves.

According to a second aspect it is provided a method for producing a heat transfer pipe according to the first aspect, said method comprising providing a cylindrical-shaped body, and forming a plurality of helical-shaped grooves on the cylindrical-shaped body, by using a plurality of rollers that are simultaneously rolled in a respective helical pattern over the external surface of the cylindrical-shaped body, such that a corrugation pattern is achieved.

An advantage with this is that the same pitch may be provided for the different grooves, but still provide for that different widths and/or depths can be provided for the grooves.

The plurality of rollers may be provided with different radii for the contact surfaces that are in contact with the external surface of the cylindrical-shaped body when the rollers are rolled in the helical pattern over the external surface, such that the plurality of helical-shaped grooves comprises grooves having different depths.

According to a third aspect it is provided a tubular heat exchanger comprising an inlet food product pipe for receiving a food product, tube bundles arranged to hold the food product, outer shells arranged around the tube bundles and arranged to hold a heat transfer fluid, a heat transfer fluid inlet connected to the outer shells and arranged to receive the heat transfer fluid, a heat transfer fluid outlet connected to the outer shells and arranged to feed out the heat transfer fluid, connection pipes arranged to connect different tube bundles to one another, and an outlet food product pipe for feeding out the food product. The tube bundles comprises at least one heat transfer pipe according to the first aspect.

According to a fourth aspect it is provided a method for heat treating a food product using a tubular heat exchanger according to the third aspect, said method comprising receiving the food product via an inlet food product pipe, transferring the food product via tube bundles and connection pipes arranged to connect the tube bundles to one another, heating the food product in the tube bundles by using a heat transfer fluid provided in outer shells placed around the tube bundles, forming a heat transfer fluid flow in the outer shells by using a corrugation pattern provided on at least one heat transfer pipe comprised in the tube bundles, and feeding out the food product via an outlet food product pipe.

The method may further comprise receiving information about features of the food product, selecting the heat transfer pipe with the corrugation pattern comprising the plurality of helical-shaped grooves, based on received information about the features of the food product, and including the selected heat transfer pipe in the tubular heat exchanger.

An advantage with selecting the heat transfer pipe based on the food product provides for that a more efficient heat treatment can be achieved. For instance, the grooves can be adapted to meet specifics needs linked to the properties of the food product, thereby making it possible to customize the heat treatment to a higher degree compared to the heat treatment customization possibilities offered by heat transfer pipes having single-groove corrugation patterns.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a tubular heat exchanger.
Fig. 2 is a side view of a first example of a heat transfer pipe.
Fig. 3A is a side view of a second example of the heat transfer pipe.
Fig. 3B is an end view of the second example of the heat transfer pipe.
Fig. 4 is a flowchart illustrating a method for producing the heat transfer pipe.
Fig. 5A illustrates a plurality of rollers forming grooves in a heat transfer pipe.
Fig. 5B illustrates one of the plurality of rollers in further detail.
Fig. 6 is a flowchart illustrating a method for heat treating a food product.

### Detailed Description

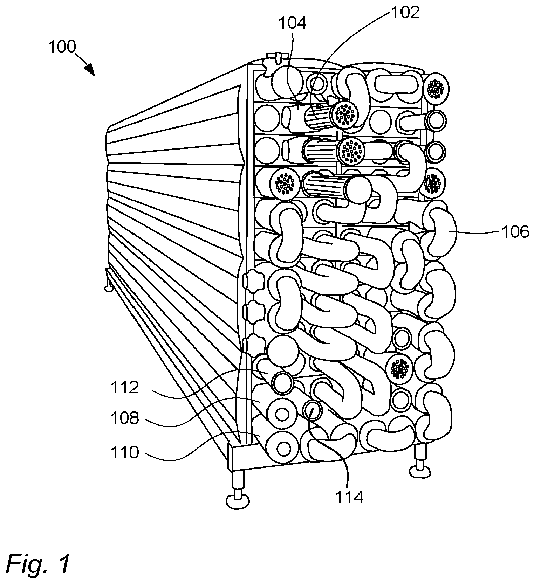

With reference to Fig. 1 a tubular heat exchanger 100 for heat treating food product is illustrated. The tubular heat exchanger 100 illustrated by way of example is a modular-based tubular heat exchanger marketed by Tetra Pak^{™}. As illustrated tube bundles 102 are provided in outer shells 104. In case the tubular heat exchanger 100 is to be used for a different type of product, the tube bundles 102 can be released from the outer shells 104 and replaced with a different type of tube bundles 102. To connect the tube bundles 102 to each other, connection pipes 106 can be used. By connecting the tube bundles 102 in this way a flow path comprising several tube bundles 102 and several connection pipes 106 can be achieved.

The food product can be fed into the tubular heat exchanger 100 via an inlet food product pipe 108 and from there into the tube bundles 102 and the connection pipes 106. Once being heat treated, the food product can be fed out from the tubular heat exchanger 100 via an outlet food product pipe 110. The heat transfer fluid, which may be hot water or heated food product, can be fed into the outer shells 104 via a heat transfer fluid inlet 112 and fed out via a heat transfer fluid outlet 114.

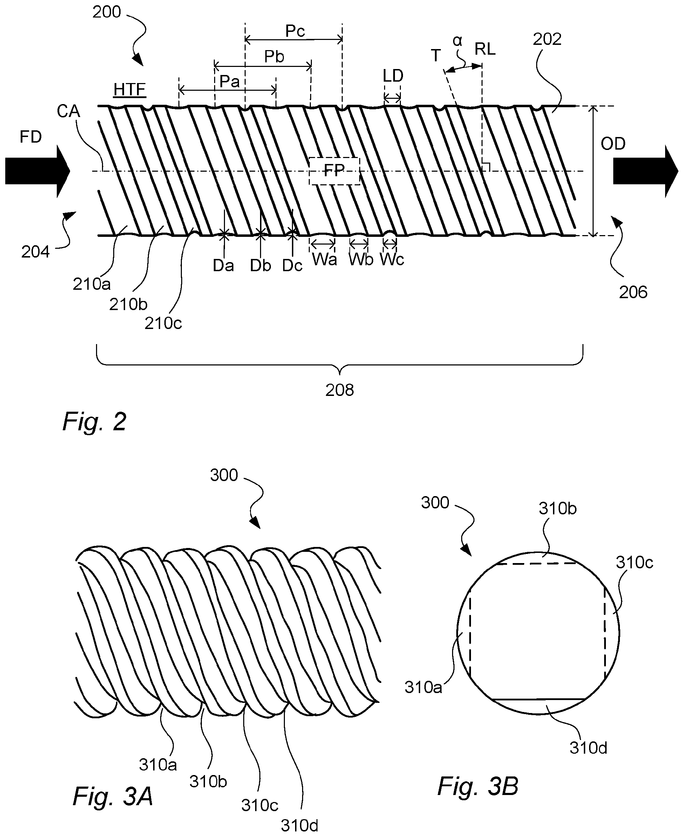

Fig. 2 illustrates by way of example a side view of a heat transfer pipe 200. This may be one of the pipes that form the tube bundle 102 illustrated in fig. 1.

The heat transfer pipe 200 can comprise a cylindrical-shaped body 202 with an inlet 204 and outlet 206 such that the food product FP can be fed in a feed direction FD from the inlet 204 to the outlet 206. Outside the heat transfer pipe 200, the heat transfer fluid HTF can be provided such that the food product FP held inside the heat transfer pipe 200 can be heated by the heat transfer fluid HTF. As illustrated in fig. 1, the heat transfer fluid HTF can be held in the outer shells 104.

To provide efficient heat exchange between the heat transfer fluid HTF and the food product FP, a corrugation pattern 208 can be provided. The corrugation pattern 208 can comprise a plurality of helical-shaped grooves 210a-c, which can be parallel. The corrugation pattern 208 improves the heat exchange in that a flow of the heat transfer fluid HTF, held outside the heat transfer pipe 200, and a flow of the food product FP, held inside the heat transfer pipe 200, are affected. The affect is typically an increased turbulence of the food product FP passing the inside of the heat transfer pipe 200, and increased turbulence of the heat transfer fluid HTF passing the outside of the heat transfer pipe 200.

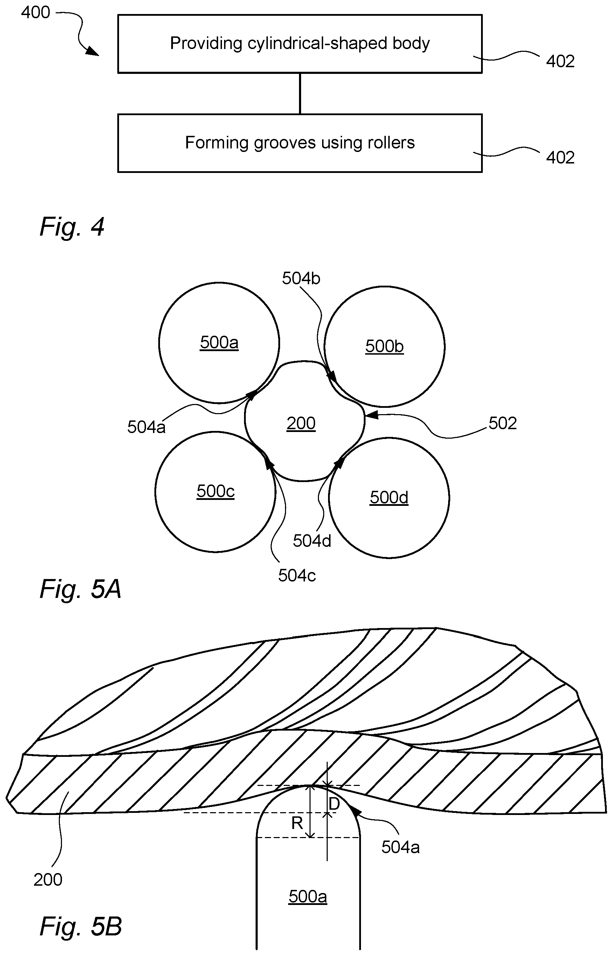

The helical-shaped grooves 210a-c can have identical pitches Pa, Pb, Pc, i.e. longitudinal center-to-center distances between the indentations of the same helical groove may be equal. The helical-shaped grooves 210a-c may however have different depths Da, Db, Dc and also different widths Wa, Wb, Wc. The different depths and widths may be a result of that different rollers are used for forming the different grooves 210a-c, as further illustrated in fig. 5A and 5B and described below.

An advantage of having different widths and/or depths is that the corrugation pattern may be adjusted more precisely. For instance, in case the food product FP comprises particles of different sizes, having the grooves with the different widths and/or depths provides a possibility to pinpoint specific behaviors of the particles with different sizes and by doing so the corrugation pattern can be fine-tuned to the food product FP to a higher degree compared to a single helical-shaped groove corrugation pattern. The different widths and/or depths may however come useful also in cases when the food product FP does not comprise particles of different sizes. For instance, a combination of two or more grooves 210a-c may be used for achieving a particular flow in the food product FP and/or the heat transfer fluid HTF. To affect the flows in the food product FP and the heat transfer fluid HTF, the depths Da, Db, Dc may differ from each other by 10% or more.

Having the plurality of helical-shaped grooves also provides the advantage that the grooves can be placed close to one another without affecting a helix angle a, wherein the helix angle α is an angle between a tangent T of the helical-shaped groove and a helix reference line RL perpendicular to a center axis CA of the heat transfer pipe 200.

Still an advantage with having the plurality of helical-shaped grooves 210a-c is that a longitudinal distance LD between consecutive grooves can be reduced compared to single helical-shaped corrugation patterns. For instance, the longitudinal distance LD may be less than half the length of the pitches Pa, Pb, Pc. Reducing the longitudinal distance LD can provide for that a surface finish of the cylindrical-shaped body 202 is improved, which in turn may provide for that a pressure drop over the tube bundle 102, formed by a number of the heat transfer pipes 200, can be reduced.

The surface finish can also be improved by that the depths Da, Db, Dc are reduced compared to single helical-shaped corrugation patterns. For instance, the depths Da, Db, Dc may be less than 1 to 4% of than outer diameter OD of the cylindrical-shaped body 202. In some applications, this means that the depths are less than 0.5 mm.

Fig. 3A and 3B illustrate another example of the heat transfer pipe 300 from a side view and an end view, respectively. Unlike the heat transfer pipe 200 illustrated in fig. 2, the heat transfer pipe 300 illustrated in fig. 3A and 3B comprises four helical-shaped grooves 310a-d. In these figures the depths of grooves are greatly exaggerated. An advantage with four grooves is that the heat transfer pipe 300 can be securely held by four rollers when forming the four grooves 310a-d.

Fig. 4 is a flow-chart illustrating a method 400 for producing the heat transfer pipe 200, 300. In a first step 402, the cylindrical-shaped body 202 can be provided, and in a second step 404, a plurality of helical-shaped grooves 210a-c, 310a-d can be formed on the cylindrical-shaped body 202. The plurality of helical-shaped grooves 210a-c, 310a-d can be formed by using a plurality of rollers 500a-d that are rolled in a helical pattern over and pressed into an external surface 502 of the cylindrical-shaped body 202, such that the corrugation pattern 208 can be achieved.

The plurality of rollers 500a-d are generally illustrated in fig. 5A. As illustrated, the plurality of helical-shaped grooves can be formed simultaneously using one roller for each groove. To provide for that different widths Wa, Wb, Wc can be achieved, contact surfaces 504a-d of the rollers 500a-d may have different radii, for instance 1.5 to 3.3 mm. The rollers 500a-d may also be placed and/or arranged such that the helical-shaped grooves 210a-c, 310a-d can be provided with different depths Da, Db, Dc.

Fig. 5B illustrates one of the rollers 500a and the heat transfer pipe 200 in further detail. As illustrated in fig. 5B, the radius R of the roller 500a can affect the width of the groove being formed. However, due to elastic properties of the material of the heat transfer pipe 200, the width of the groove formed does not necessarily correspond to the double radius R of the roller 500a. By taking into account the elastic properties of the material, such as stainless steel, as well as a thickness of the heat transfer pipe, the width of the groove formed by the roller 500a may be calculated.

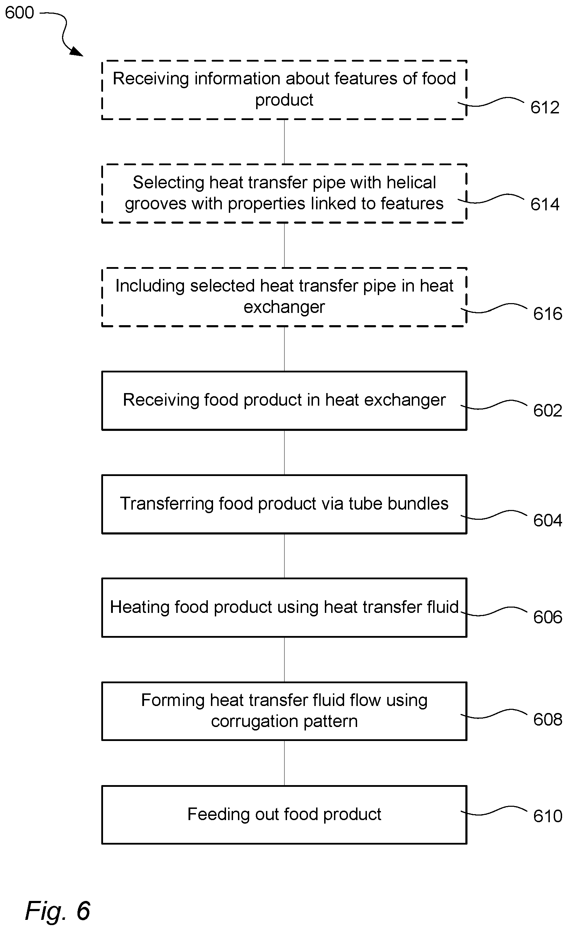

Fig. 6 is a flow chart illustrating a method 600 for heat treating the food product FP using the tubular heat exchanger 100 illustrated in fig. 1 with the tube bundles 102 comprising the heat transfer pipes 200, 300 as illustrated in fig. 2 or 3A and 3B.

In a first step 602, the food product FP can be received via the inlet food product pipe 108. In a second step 604, the food product FP can be transferred via the tube bundles 102 and the connection pipes 106 arranged to connect the tube bundles 102 to one another. In a third step 606, the food product FP in the tube bundles 102 can be heated by using the heat transfer fluid HTF provided in the outer shells 104 placed around the tube bundles 102. In a fourth step 608, a heat transfer fluid flow in the outer shells 104 can be formed by using the corrugation pattern 208 provided on at least one heat transfer pipe 200, 300 comprised in the tube bundles 102. Basically, this means that the corrugation pattern 208 creates a turbulence pattern for the heat transfer fluid flow in the outer shells 104. In a fifth step 610, the food product FP can be fed out via the outlet food product pipe 110.

Optionally, the first step 602 may be preceded by a first pre-step 612 in which information about features of the food product FP can be received, a second pre-step 614 in which the heat transfer pipe 200, 300 with the corrugation pattern 208 comprising the plurality of helical-shaped grooves 210a-c, 310a-d can be selected, wherein the plurality of helical-shaped grooves 210a-c, 310a-d have properties linked to the features of the food product FP, and a third pre-step 616 in which the heat transfer pipe 200, 300, which is selected, can be included in the tubular heat exchanger 100.

Thus, the properties of the plurality of helical-shaped grooves 210a-c, 310a-d can be selected based on features of the food product FP. The properties may be at least two of the number of the grooves, the different widths of the grooves, the different depths of the grooves, the pitch of the grooves, and the longitudinal distances between consecutive grooves.

Selecting the corrugation pattern 208 based on the features of the food product FP can be done in different ways. For instance, the selection can be made based on data retrieved from installed base, i.e. already present tubular heat exchangers 100 provided with the heat transfer pipe 200, 300. In case it can be found from this data, that a particular corrugation pattern 208 is suitable for a particular food product, defined by e.g. viscosity, particle size, fat content, fiber content, this link can be used when a new tubular heat exchanger is to be set up for the particular food product. By sharing learnings in this way, a database of corrugation patterns for different food products can be established and improved over time.

As an alternative to collecting data from different tubular heat exchangers 100 and establish the database, theoretical models may be developed such that the properties of the food products, such as viscosity, particle size, fat content, fiber content, etc., can be used for selecting the corrugation pattern 208 corresponding to the particular food product FP.

The two alternatives can also be combined. For instance, based on the data collected from the installed base, theoretical models may be developed.

From the description above follows that, although various embodiments of the invention have been described and shown, the invention is not restricted thereto, but may also be embodied in other ways within the scope of the subject-matter defined in the following claims.

## Claims

1. A heat transfer pipe (200, 300) for a heat exchanger (100) for heat treating a food product (FP), said heat transfer pipe (200) comprising
a cylindrical-shaped body (202) for holding the food product (FP), said cylindrical-shaped body (202) comprising an inlet (204) and an outlet (206),
a corrugation pattern (208), provided on the cylindrical-shaped body (202), for affecting a flow of a heat transfer fluid (HTF) provided outside the cylindrical-shaped body (202) and a flow of the food product (FP) inside the cylindrical-shaped body (202),
wherein the corrugation pattern (208) comprises a plurality of helical-shaped grooves (210a-c, 310a-d),
wherein the helical-shaped grooves (210a-c, 310a-d) are parallel.

2. The heat transfer pipe (200, 300) according to claim 1, wherein the plurality of helical-shaped grooves (210a, 210b, 210c) have identical pitches (Pa, Pb, Pc).

3. The heat transfer pipe (200, 300) according to claim 2, wherein longitudinal distances (LD) between consecutive grooves of the helical-shaped grooves (210a-c, 310a-d) are less than half the length of the pitches (Pa, Pb, Pc).

4. The heat transfer pipe (200, 300) according to claim 1 or 2, wherein the plurality of helical-shaped grooves (210a, 210b, 210c) have different depths (Da, Db, Dc), and the different depths (Da, Db, Dc) differ from each other by 10% or more.

5. The heat transfer pipe (200, 300) according to any one of the preceding claims, wherein the plurality of helical-shaped grooves (210a, 21b, 210c) have depths (Da, Db, Dc) that are less than 1% to 4% of an outer diameter (OD) of the cylindrical-shaped body (202).

6. The heat transfer pipe (200, 300) according to any one of the preceding claims, wherein the plurality of helical-shaped grooves (210a, 210b, 210c) have different widths (Wa, Wb, Wc).

7. The heat transfer pipe (200, 300) according to any one of the preceding claims, wherein the plurality of helical-shaped grooves (210a, 210b, 210c) are made by rollers (500a-d) having a respective radii (R) between 1.5 to 3.3 mm.

8. The heat transfer pipe (200, 300) according to any one of the preceding claims, wherein the plurality of helical-shaped grooves (310a-d) comprises four helical-shaped grooves.

9. The heat transfer pipe (200, 300) according to any one of the preceding claims, wherein properties of the plurality of helical-shaped grooves (210a-c, 310a-d) are selected based on features of the food product (FP).

10. The heat transfer pipe (200, 300) according to claim 9, wherein the properties are at least two of the number of grooves, the different widths of the grooves, the different depths of the grooves, the pitch of the grooves, and the longitudinal distances between consecutive grooves.

11. A method (400) for producing a heat transfer pipe (200, 300) according to any one of the preceding claims, said method comprising
providing (402) a cylindrical-shaped body (202), and
forming (404) a plurality of helical-shaped grooves (210a-c) on the cylindrical-shaped body (202), by using a plurality of rollers (500a-d) that are simultaneously rolled in a respective helical pattern over the external surface (502) of the cylindrical-shaped body (202), such that a corrugation pattern (208) is achieved.

12. The method according to claim 11, wherein the plurality of rollers (500a-d) are provided with different radiuses for the contact surfaces (504a-d) that are in contact with the external surface (502) of the cylindrical-shaped body (202) when the rollers (500a-d) are rolled in the helical pattern over the external surface (502), such that the plurality of helical-shaped grooves (210a-c) comprises grooves having different depths.

13. A tubular heat exchanger (100) comprising
an inlet food product pipe (108) for receiving a food product (FP),
tube bundles (102) arranged to hold the food product (FP),
outer shells (104) arranged around the tube bundles (102) and arranged to hold a heat transfer fluid (HTF),
a heat transfer fluid inlet (112) connected to the outer shells (104) and arranged to receive the heat transfer fluid (HTF),
a heat transfer fluid outlet (114) connected to the outer shells (104) and arranged to feed out the heat transfer fluid (HTF),
connection pipes (106) arranged to connect different tube bundles (102) to one another, and
an outlet food product pipe (110) for feeding out the food product (FP), wherein the tube bundles (102) comprise at least one heat transfer pipe (200) according to any one of claims 1 to 10.

14. A method (600) for heat treating a food product (FP) using a tubular heat exchanger (100) according to claim 13, said method comprising
receiving (602) the food product (FP) via an inlet food product pipe (108), transferring (604) the food product (FP) via tube bundles (102) and connection pipes (106) arranged to connect the tube bundles (102) to one another,
heating (606) the food product (FP) in the tube bundles (102) by using a heat transfer fluid (HTF) provided in outer shells (104) placed around the tube bundles (102) ,
forming (608) a heat transfer fluid flow in the outer shells (104) by using a corrugation pattern (208) provided on at least one heat transfer pipe (200, 300) comprised in the tube bundles (102), and
feeding out (610) the food product (FP) via an outlet food product pipe (110).

15. The method according to claim 14, further comprising
receiving (612) information about features of the food product (FP),
selecting (614) the heat transfer pipe (200, 300) with the corrugation pattern (208) comprising the plurality of helical-shaped grooves (210a-c, 310a-d), based on received information about the features of the food product (FP), and
including (616) the selected heat transfer pipe (200, 300) in the tubular heat exchanger (100).
